# DEMANDE DE BREVET EUROPEEN

(11) **EP 0 561 678 A1**
(43) Date de publication de la demande: **22.09.1993**
(21) Numéro de dépôt: 93400639.6
(22) Date de dépôt: 12.03.1993
(51) Int. Cl.: G06K 19/12, G06K 1/12

(54) **Procédé d'enregistrement et de lecture d'une bande magnétique bicouche et système de mise en oeuvre**

(30) Priorité: 20.03.1992 FR 9203388
(71) Demandeur: KIOTA INTERNATIONAL, F-13600 La Ciotat (FR)
(72) Inventeur: Tuilier, Edmond, F-75116 Paris (FR); Martin, Philippe, F-75116 Paris (FR)
(74) Mandataire: Ballot, Paul Denis Jacques

(57) **Abrégé**

L'invention concerne les bandes magnétiques bicouche et, plus particulièrement, un procédé et un système qui permettent d'enregistrer et de lire de telles bandes magnétiques en assurant un haut degré de protection contre les erreurs et/ou les fraudes.

L'invention réside dans le fait que la bande magnétique bicouche (10) comprend une première couche (12) à champ coercitif élevé disposé sur un support (11) et une deuxième couche (13) à champ coercitif plus faible recouvrant la première. Ces deux couches sont enregistrées de manière synchrone de manière que toutes les informations nécessaires soient enregistrées sur la deuxième couche (13) alors qu'une partie des informations est enregistrée sur la première couche. Le procédé de lecture permet de valider les informations de la deuxième couche en fonction des informations lues dans la première couche après effacement de la deuxième couche.

L'invention est applicable aux vignettes magnétiques pour boîtes de médicament.

## Description

L'invention concerne les bandes magnétiques bicouche et, plus particulièrement, un procédé et un système qui permettent d'enregistrer et de lire de telles bandes magnétiques en assurant un haut degré de protection contre les erreurs et/ou les fraudes.

De manière plus précise, ce haut degré de protection contre les erreurs et/ou les fraudes est obtenu en faisant en sorte qu'il ne soit plus possible de modifier l'information utile sans encourir un rejet lors de la lecture de l'information modifiée.

L'invention sera décrite dans une application particulière à l'enregistrement et à la lecture de vignettes magnétiques portées par l'emballage de médicaments. Ces vignettes magnétiques sont prévues pour enregistrer un certain nombre d'informations telles que le Code d'Identification Pharmaceutique (C.I.P.), le taux de remboursement, le prix ... Lors de la vente d'un médicament par un pharmacien, cette vignette magnétique est lue par un lecteur qui est relié à un ordinateur et les informations lues sont traitées par cet ordinateur en vue d'être comptabilisées par le pharmacien et/ou d'être transmises à l'organisme de remboursement.

Afin d'éviter les conséquences des erreurs et de combattre les fraudes, il est de première importance qu'un médicament vendu ne puisse pas être comptabilisé ou remboursé plus d'une fois.

Le but de l'invention est donc de mettre en oeuvre un procédé et un système d'enregistrement et de lecture de vignettes magnétiques qui ne permettent pas de telles erreurs et/ou fraudes.

A cet effet, l'invention propose d'utiliser une vignette ou bande magnétique bicouche dont une couche a un champ coercitif élevé tandis que l'autre couche a un champ coercitif plus faible. Ces deux couches sont enregistrées en synchronisme de manière à enregistrer toutes les informations nécessaires dans la couche à faible champ coercitif et seulement une partie d'entre elles, par exemple le prix, dans la couche à fort champ coercitif. Lors de la lecture de la vignette au moment de la vente, les informations de la couche à faible champ coercitif sont effacées après une lecture sans erreur et les informations de la couche à fort champ coercitif sont lues pour être comparées aux informations correspondantes lues précédemment sur la couche à faible champ coercitif. Si la comparaison ne décèle aucune erreur, alors les informations lues sur la couche à faible champ coercitif sont validées en vue de leur comptabilisation et/ou leur transmission à l'organisme de remboursement; elles sont considérées comme erronées ou fausses dans le cas contraire et ne sont pas prises en compte.

L'invention concerne d'abord un procédé d'enregistrement et de lecture d'une bande ou vignette magnétique bicouche comportant une première couche magnétique à champ coercitif élevé et une deuxième couche magnétique à champ coercitif plus faible que celui de la première couche, cette deuxième couche recouvrant la première par rapport à un support de ladite bande ou vignette magnétique, caractérisé en ce qu'il comprend les opérations suivantes :
a) enregistrement synchrone sur la première et la deuxième couches d'informations identiques à l'exception de certaines informations déterminées qui ne sont pas enregistrées sur la première couche magnétique;
b) lecture des informations enregistrées sur au moins la deuxième couche;
c) effacement des informations enregistrées sur la deuxième couche;
d) lecture des informations enregistrées sur la première couche;
e) comparaison des informations lues sur la première couche avec les informations correspondantes lues sur la deuxième couche, et
f) validation des informations lues sur la deuxième couche si la comparaison de l'opération e) n'a pas décelé d'erreur ou leur rejet dans le cas contraire.

Selon l'invention, l'opération a) consiste à effectuer l'enregistrement synchrone à l'aide d'impulsions de courant d'une première amplitude déterminée pour n'enregistrer que la deuxième couche magnétique et d'impulsions de courant, d'une deuxième amplitude déterminée supérieure à ladite première amplitude déterminée pour enregistrer simultanément sur les première et deuxième couches les mêmes informations.

L'invention concerne également une bande ou vignette magnétique pour mettre en oeuvre le procédé décrit ci-dessus, comportant une première couche magnétique à champ coercitif élevé et une deuxième couche magnétique à champ coercitif plus faible que celui de la première couche, cette deuxième couche recouvrant la première par rapport à un support de ladite bande ou vignette magnétique, caractérisée en ce que les première et deuxième couches présentent des enregistrements identiques aux mêmes emplacements, sauf pour certains emplacements déterminés dans lesquels la première couche ne comporte aucun enregistrement.

L'invention concerne un système pour mettre en oeuvre le procédé d'enregistrement décrit ci-dessus, caractérisé en ce qu'il comprend :
- une tête d'enregistrement, et
- des moyens pour appliquer à ladite tête d'enregistrement des impulsions de courant bipolaire ayant ladite première amplitude déterminée pour n'enregistrer que sur ladite première couche magnétique et ladite deuxième amplitude déterminée pour enregistrer simultanément sur lesdites première et deuxième couches les mêmes informations.

L'invention concerne enfin un système pour mettre en oeuvre le procédé de lecture décrit ci-dessus, caractérisé en ce qu'il comprend :
- une première tête de lecture pour lire les informations enregistrées dans ladite deuxième couche,
- une tête d'effacement pour effacer les informations enregistrées dans ladite deuxième couche,
- une deuxième tête de lecture pour lire les informations enregistrées dans ladite première couche après effacement de ladite deuxième couche, et
- un circuit comparateur pour comparer les informations correspondantes lues dans lesdites première et deuxième couches et valider les informations lues dans ladite deuxième couche en l'absence d'erreur décelée par ledit circuit comparateur.

D'autres buts, caractéristiques et avantages de la présente invention apparaîtront à la lecture de la description suivante d'un exemple particulier de réalisation du procédé et du système, ladite description étant faite en relation avec les dessins joints dans lesquels :
- la figure 1 est une vue schématique d'une vignette ou bande magnétique bicouche sur un support;
- la figure 2 est un diagramme temporel montrant la forme et l'amplitude des courants d'écriture de la vignette ou bande magnétique bicouche qui est utilisée selon le procédé de l'invention;
- la figure 3 illustre les différentes opérations qui sont effectuées sur la bande magnétique et leurs effets sur cette dernière;
- la figure 4 est un schéma fonctionnel illustrant le système pour mettre en oeuvre le procédé selon l'invention, et
- la figure 5 est un schéma fonctionnel d'un système complet d'utilisation d'une bande magnétique bicouche.

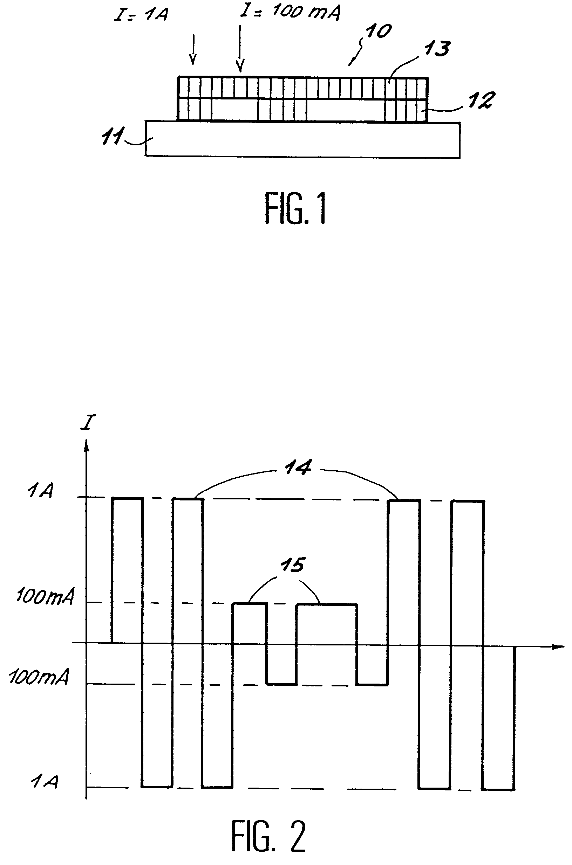

Dans les différentes figures, les références identiques désignent les mêmes éléments en vue des mêmes résultats. Une bande ou vignette magnétique bicouche 10 telle qu'utilisée selon le procédé et dans le système selon l'invention, comporte sur un support 11 (figure 1), en papier adhésif par exemple, une première couche magnétique 12 qui a un champ coercitif élevé, de l'ordre de quelques milliers d'Oersteds, 4000 Oersteds par exemple. Cette première couche est recouverte d'une deuxième couche magnétique 13 qui a un champ coercitif plus faible que celui de la première, de l'ordre de quelques centaines d'Oersteds, 300 par exemple.

Les valeurs des champs coercitifs ne sont pas critiques sauf qu'elles doivent être très différentes mais un bon compromis semble être un rapport 10 au moins entre les valeurs du champ fort et du champ faible.

Les épaisseurs des première et deuxième couches n'ont pas des valeurs critiques mais un bon compromis semble être une épaisseur de la première couche qui est deux fois plus importante que celle de la deuxième couche, par exemple dix microns pour la première et cinq microns pour la deuxième.

Selon le procédé de l'invention, ces deux couches magnétiques sont enregistrées simultanément en synchronisme à l'aide d'un courant dont la forme d'onde et l'amplitude sont représentées schématiquement par le diagramme de la figure 2. Ainsi, pour enregistrer des informations sur les deux couches magnétiques 12 et 13, les courants sont de forte amplitude, par exemple d'un ampère (impulsions 14), mais ils sont de moindre amplitude par exemple cent milliampères (impulsions 15), pour n'enregistrer que des informations sur la deuxième couche magnétique 13. Les valeurs des intensités de ces courants ne sont pas critiques mais avec les valeurs choisies pour les champs coercitifs, le rapport des intensités doit être de dix environ.

Ces impulsions de courant, positives ou négatives selon le chiffre binaire à enregistrer, orientent les moments magnétiques de chaque couche dans un sens déterminé. Sur les différentes figures, on a représenté le synchronisme de l'enregistrement sur les deux couches par des traits, alignées d'une couche magnétique à l'autre.

Selon l'invention, toutes les informations qui sont nécessaires sont enregistrées sur la deuxième couche 13 tandis qu'une partie de ces informations est enregistrée sur la première couche 12. Pour obtenir ce résultat, on utilise des courants de forte amplitude pour enregistrer les informations qui doivent être présentes sur les deux couches et des courants plus faibles pour enregistrer les informations qui ne doivent être présentes que sur la deuxième couche.

Ainsi, dans le cas de vignettes magnétiques pour médicaments, la deuxième couche magnétique enregistre les informations de prix, de taux de remboursement et de Code Identification Pharmaceutique (C.I.P), tandis que la première couche magnétique n'enregistre que le prix. De ce mode d'enregistrement, il résulte que la première couche magnétique présente des "blancs", mais que lorsqu'il y a des enregistrements sur les deux couches, ils sont parfaitement synchronisés et identiques en valeurs significatives.

Afin que les informations enregistrées sur les deux couches magnétiques puissent concourir au but recherché, la vignette magnétique telle qu'enregistrée comme ci-dessus doit être soumise aux opérations successives suivantes :
- lecture des informations de la vignette, c'est-à-dire que les deux couches 12 et 13 sont lues simultanément bien que l'on ne s'intéresse qu'aux informations de la deuxième couche;
- effacement des informations de la deuxième couche 13 si la lecture de cette dernière a été effectuée sans erreur;
- lecture des informations de la première couche 12 seule;
- comparaison des informations lues sur la première couche 12 avec les informations correspondantes lues sur la deuxième couche 13;
- validation, c'est-à-dire prise en compte des informations lues sur la deuxième couche 13 si la comparaison n'a décelé aucune erreur; dans le cas contraire, elles ne sont pas prises en compte.

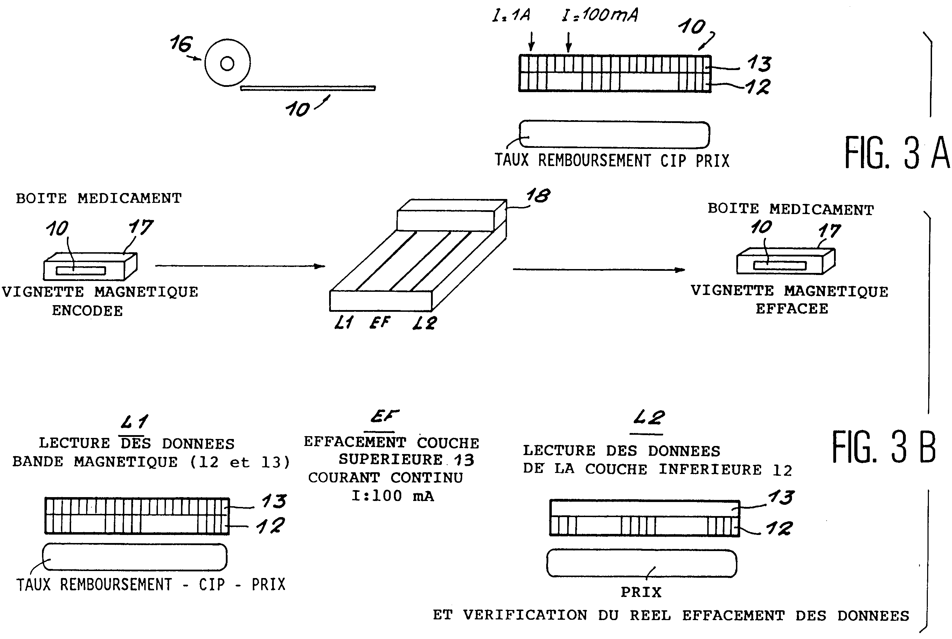

La figure 3A illustre les différentes opérations d'enregistrement tandis que la figure 3B illustre les différentes opérations de lecture et d'effacement.

L'enregistrement ou encodage des deux couches de la vignette magnétique 10 est obtenu en faisant défiler la vignette 10 devant une tête d'enregistrement 16 qui est alimentée par des impulsions de courant 14 et 15 illustrées par la figure 2 de manière à enregistrer sélectivement sur la première couche 12 à fort champ coercitif. Les informations qui sont enregistrées sur les deux couches sont représentées schématiquement par la partie droite de la figure 3A, l'absence de traits verticaux sur la première couche 12 indique que cette partie ne comporte pas d'informations.

Sur la figure 3B, la vignette magnétique 10, telle qu'encodée selon le processus décrit en relation avec la figure 3A, est portée par une boîte 17 contenant le médicament. Cette vignette est déplacée dans une table de lecture 18 qui comprend trois têtes magnétiques L1, EF et L2. La première tête L1 pour la lecture simultanée des deux couches magnétiques 12 et 13 ou au moins la lecture de la couche 13, la deuxième tête EF pour l'effacement sélectif de la deuxième couche 13 uniquement et la troisième tête L2 pour la lecture de la première couche 12. L'effacement est par exemple obtenu par un courant continu de 100 milliampères appliqué à la tête magnétique EF.

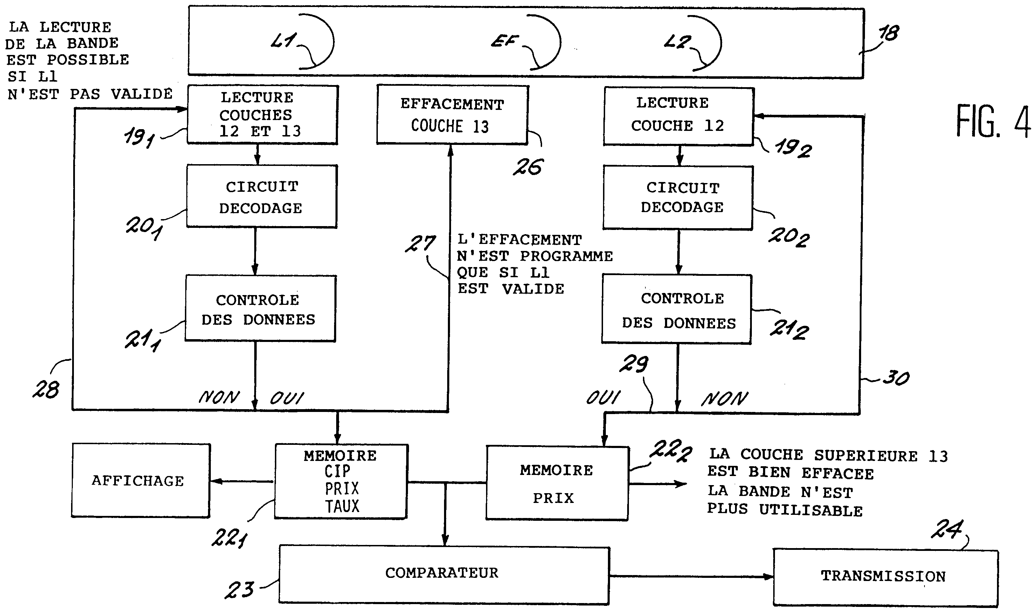

La figure 4 illustre le système qui permet de mettre en oeuvre les différentes opérations du procédé lors de la lecture de la vignette magnétique.

A chaque tête magnétique L1 (ou L2) sont associés un circuit de lecture 19₁ (ou 19₂), un circuit de décodage 20₁ (ou 20₂) des signaux lus, un circuit de contrôle 21₁ (ou 21₂) des données résultant du décodage et une mémoire 22₁ (ou 22₂) pour l'enregistrement des données si le contrôle a été positif. Les mémoires 22₁ et 22₂ sont connectées en sortie à un circuit comparateur 23 qui compare les données contenues dans chaque mémoire et qui commande un circuit de transmission 24 pour transmettre le contenu de la mémoire 22₁ lorsque les données contenues dans les mémoires 22₁ et 22₂ sont différentes sauf en ce qui concerne les données qui doivent être identiques telles que le prix dans l'exemple particulier de réalisation. Un circuit d'affichage 25 permet de visualiser les données contenues dans la mémoire 22₁.

A la tête d'effacement EF est associé un circuit d'effacement 26 qui est commandé (liaison 27) par le circuit de contrôle 21₁ de manière à provoquer l'effacement de la deuxième couche 13 lorsque la lecture de cette dernière a été effectuée sans erreur. Dans le cas contraire, la vignette magnétique 10 peut être à nouveau lue grâce à un signal de commande du circuit de lecture 19₁ par la liaison 28. La liaison 27 autorise également l'enregistrement des données lues dans la mémoire 22₁.

Le circuit de contrôle 21₂ autorise l'enregistrement (liaison 29) des données lues sur la première couche 12 lorsque la lecture de cette dernière a été effectuée sans erreur. Dans le cas contraire, la vignette magnétique peut être à nouveau lue par la tête L2 (liaison 30).

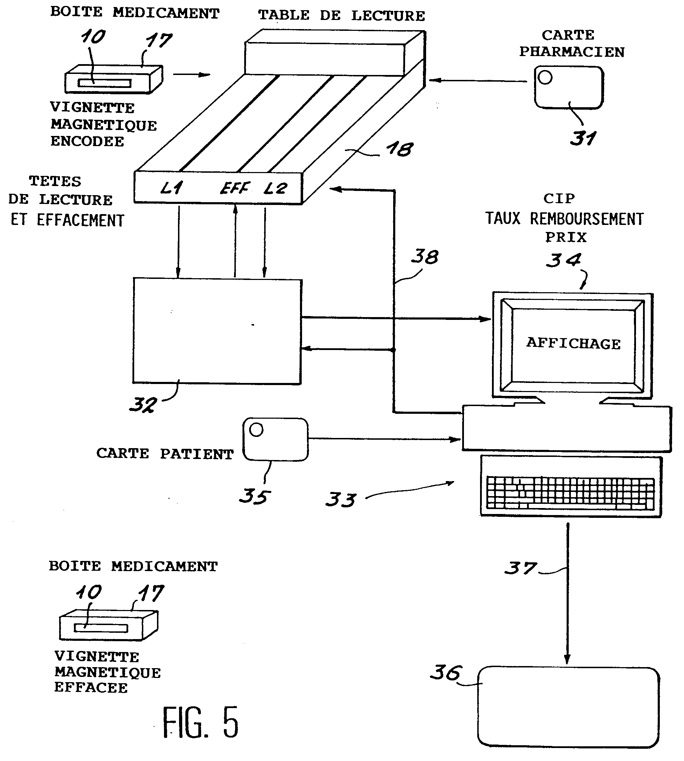

La figure 5 est un schéma fonctionnel simplifié d'un système utilisant une vignette magnétique 10 encodée selon l'invention qui est portée par une boîte de médicament 10. Le pharmacien qui vend le médicament a une carte à puce 31 dont les données sont lues par la table de lecture 18 de manière à valider le fonctionnement de la table de lecture 18. A la table de lecture 18 sont associés les circuits décrits en relation avec la figure 4, circuits qui sont référencés globalement par 32. Le circuit global 32 transfert le contenu des données de la mémoire 22₁ à un ordinateur 33 sur l'écran 34 duquel s'affichent les données à transmettre.

Les informations qui concernent le patient à qui est destiné le médicament sont contenues dans une carte à puce 35 et les informations sont, par exemple, lues par un lecteur associé à l'ordinateur 33. Ce sont l'ensemble des informations provenant de la lecture de la vignette magnétique 10 et de la carte patient qui sont transmises à l'organisme de remboursement 36 ou centre utilisateur sur une ligne de transmission 37.

Dans une variante, la carte du pharmacien 31 peut être lue aussi par lecture associée à l'ordinateur et certaines des informations qui y sont contenues peuvent être transmises à l'organisme de remboursement.

Par ailleurs, l'ordinateur 33 peut servir à commander la table de lecture 18 dont cette dernière est un organe périphérique (liaison 38).

## Revendications

1. Procédé d'enregistrement et de lecture d'une bande ou vignette magnétique bicouche comportant une première couche magnétique (12) à champ coercitif élevé et une deuxième couche magnétique (13) à champ coercitif plus faible que celui de la première couche, cette deuxième couche (13) recouvrant la première (12) par rapport à un support (11) de ladite bande ou vignette magnétique, caractérisé en ce qu'il comprend les opérations suivantes :
(a) enregistrement synchrone sur la première (12) et la deuxième (13) couches d'informations identiques à l'exception de certaines informations déterminées qui ne sont pas enregistrées sur la première couche magnétique (12);
(b) lecture des informations enregistrées dans au moins la deuxième couche (13);
(c) effacement des informations enregistrées dans la deuxième couche (13);
(d) lecture des informations enregistrées dans la première couche (12);
(e) comparaison des informations lues sur la première couche (12) avec les informations correspondantes lues sur la deuxième couche (13), et
(f) validation des informations lues sur la deuxième couche (13) si la comparaison de l'opération (e) n'a pas décelé d'erreur ou leur rejet dans le cas contraire.

2. Procédé selon la revendication 1, caractérisé en ce que l'opération (a) consiste à effectuer l'enregistrement synchrone à l'aide d'impulsions de courant (15) d'une première amplitude déterminée pour n'enregistrer que la deuxième couche magnétique (13) et d'impulsions de courant (16), d'une deuxième amplitude déterminée supérieure à ladite première amplitude déterminée pour enregistrer simultanément sur les première et deuxième couches (12,13) les mêmes informations.

3. Procédé selon la revendication 1 ou 2, caractérisé en ce que l'opération (b) consiste en la lecture des informations enregistrées sur les première et deuxième couches (12,13).

4. Procédé selon l'une des revendications précédentes 1 à 3, caractérisé en ce que l'opération (c) n'est effectuée que si l'opération (b) n'a décelé aucune erreur.

5. Procédé selon l'une des revendications précédentes 1 à 4, caractérisé en ce qu'il comprend, en outre, l'opération suivante :
(g) transmission des informations validées vers un centre utilisateur.

6. Bande ou vignette magnétique pour mettre en oeuvre le procédé selon l'une quelconque des revendications précédentes 1 à 5, et comportant une première couche magnétique (12) à champ coercitif élevé et une deuxième couche magnétique (13) à champ coercitif plus faible que celui de la première couche, cette deuxième couche (13) recouvrant la première par rapport à un support (11) de ladite bande ou vignette magnétique, caractérisée en ce que les première et deuxième couches (12,13) présentent des enregistrements identiques aux mêmes emplacements, sauf pour certains emplacements déterminés dans lesquels la première couche (12) ne comporte aucun enregistrement.

7. Bande ou vignette magnétique selon la revendication 6, caractérisée en ce que les valeurs du champ coercitif élevé et du champ coercitif faible sont dans un rapport 10 au moins.

8. Bande ou vignette magnétique selon la revendication 6, caractérisée en ce que la première couche (12) a un champ coercitif de 4000 Oersteds environ, tandis que la deuxième couche (13) a un champ coercitif de 300 Oersteds environ.

9. Système pour mettre en oeuvre le procédé d'enregistrement selon l'une des revendications précédentes 2 à 5, caractérisé en ce qu'il comprend :
- une tête d'enregistrement, et
- des moyens pour appliquer à ladite tête d'enregistrement des impulsions de courant bipolaire ayant ladite première amplitude déterminée pour n'enregistrer que sur ladite première couche magnétique (13) et ladite deuxième amplitude déterminée pour enregistrer simultanément sur lesdites première et deuxième couches (12,13) les mêmes informations.

10. Système pour mettre en oeuvre le procédé de lecture selon l'une des revendications 1 à 5, caractérisé en ce qu'il comprend :
- une première tête de lecture (19₁) pour lire les informations enregistrées dans ladite deuxième couche (13),
- une tête d'effacement (26) pour effacer les informations enregistrées dans ladite deuxième couche (13),
- une deuxième tête de lecture (19₂) pour lire les informations enregistrées dans ladite première couche (12) après effacement de ladite deuxième couche (13), et
- un circuit comparateur (23) pour comparer les informations correspondantes lues dans lesdites première et deuxième couches (12,13) et valider les informations lues dans ladite deuxième couche (13) en l'absence d'erreur décelée par ledit circuit comparateur (23).

11. Système selon la revendication 10, caractérisé en ce qu'il comprend, en outre, des moyens de transmission des informations validées vers un centre utilisateur.

12. Système selon la revendication 10 et 11, caractérisé en ce que les première et deuxième têtes de lecture (19₁,19₂), la tête d'effacement (26) et le circuit comparateur (23) constituent une table de lecture (18) sur laquelle est déplacée la bande ou vignette magnétique (10).

13. Système selon la revendication 12, caractérisé en ce que la table de lecture (18) comporte, en outre, des moyens pour lire et interpréter des informations contenues dans une première carte magnétique (31), de manière à valider les opérations effectuées par la table de lecture (18).

14. Système selon la revendication 12 ou 13, caractérisé en ce que le système comprend, en outre, un ordinateur (33) sur l'écran (34) duquel peuvent s'afficher les informations lues sur ladite deuxième couche (12) et qui est apte à lire et interpréter les informations contenues dans une deuxième carte magnétique (35), de manière à valider les informations affichées sur ledit écran (34).

15. Système selon la revendication 14, caractérisé en ce que la table de lecture est un organe périphérique dudit ordinateur (liaison 38) et en ce que ledit ordinateur (33) est apte à lire et à interpréter les informations contenues dans ladite première carte.
